(19) **Europäisches Patentamt / European Patent Office / Office européen des brevets**

(11) **EP 4 438 385 A1**

(12) # EUROPEAN PATENT APPLICATION
published in accordance with Art. 153(4) EPC

(43) Date of publication:
**02.10.2024 Bulletin 2024/40**

(21) Application number: **23759316.5**

(22) Date of filing: **27.02.2023**

(51) International Patent Classification (IPC):
**B60L 15/20** $^{(2006.01)}$

(52) Cooperative Patent Classification (CPC):
**B60L 15/20;** Y02T 10/72

(86) International application number:
**PCT/CN2023/078389**

(87) International publication number:
**WO 2023/160695 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 CN 202210187935**

(71) Applicant: **BYD Company Limited Shenzhen, Guangdong 518118 (CN)**

(72) Inventors:
- QIN, Tao
  **Shenzhen, Guangdong 518118 (CN)**
- WANG, Chunsheng
  **Shenzhen, Guangdong 518118 (CN)**
- XU, Boliang
  **Shenzhen, Guangdong 518118 (CN)**
- XIONG, Wei
  **Shenzhen, Guangdong 518118 (CN)**
- CAO, An
  **Shenzhen, Guangdong 518118 (CN)**

(74) Representative: **Arnold & Siedsma Bezuidenhoutseweg 57 2594 AC The Hague (NL)**

(54) **VEHICLE AND ACTIVE DAMPING CONTROL METHOD THEREFOR, AND VEHICLE CONTROL UNIT**

(57) A vehicle and an active damping control method therefor, and a vehicle controller are provided. The method includes the following steps. A rotation speed of a motor is obtained. Filtering is respectively performed on the rotation speed through a first low-pass filter and a second low-pass filter, to obtain a first filtered rotation speed and a second filtered rotation speed, and a rotation speed fluctuation value is obtained based on the first filtered rotation speed and the second filtered rotation speed. An active damping adjustment coefficient and an active damping clipped torque are obtained based on the rotation speed. An active damping torque is obtained based on the rotation speed fluctuation value, the active damping adjustment coefficient, and the active damping clipped torque. The motor is controlled through the motor controller based on the active damping torque. The method is applicable to a wide range of working conditions, is easy to implement and verify, and can effectively eliminate vehicle vibration at lower costs.

| Step | Description |
|------|-------------|
| S101 | Obtain a rotation speed of a motor |
| S102 | Respectively perform filtering on the rotation speed through a first low-pass filter and a second low-pass filter, to obtain a first filtered rotation speed and a second filtered rotation speed, and obtain a rotation speed fluctuation value based on the first filtered rotation speed and the second filtered rotation speed |
| S103 | Obtain an active damping adjustment coefficient and an active damping clipped torque based on the rotation speed |
| S104 | Obtain an active damping torque based on the rotation speed fluctuation value, the active damping adjustment coefficient, and the active damping clipped torque |
| S105 | Control the motor through a motor controller based on the active damping torque |

FIG. 1

## Description

### CROSS-REFERENCE TO RELATED APPLICATIONS

The present disclosure claims priority to Chinese Patent Application 202210187935.X, filed on February 28, 2022 and entitled "VEHICLE AND ACTIVE DAMPING CONTROL METHOD THEREFOR, AND VEHICLE CONTROLLER". The entire content of the above-referenced application is incorporated herein by reference.

### FIELD

The present disclosure relates to the technical field of vehicles, and more specifically, to an active damping control method for a vehicle, a vehicle controller, and a vehicle.

### BACKGROUND

To solve a problem of vehicle vibration, the related art provides a control method for calculating a compensation torque depending on whether a change rate of a rotation speed of a motor is positive or negative. In the method, a change rate of a rotation speed within 100 ms is calculated, it is determined whether the change rate is positive or negative, and a threshold is determined. If an absolute value of the change rate is greater than 1200, a value in a range of 2 Nm to 5 Nm is correspondingly compensated. A control target of the method is a scenario in which an acceleration of a motor is zero. When the acceleration is not zero, a compensation torque is applied. Therefore, the method is applicable to only application scenarios of working points with a fixed rotation speed, and is inapplicable to a vehicle condition with frequent acceleration and deceleration.

Moreover, the related art further provides a method, in which an acceleration sensor is mounted to a vehicle to collect a vehicle acceleration in real time, and the vehicle acceleration is controlled to be close to a reference acceleration through a PID, so as to obtain a compensation torque of each driving wheel and superimpose the compensation torque to an original torque to achieve active damping. A problem of the method is that an additional acceleration sensor needs to be added, which increases costs for the vehicle.

In addition, the related art further provides a method for suppressing vibration during startup while ensuring vehicle acceleration performance by increasing a step size of a motor in response to a vehicle expected moment and adding a rotation speed feedback link to correct the vehicle expected moment. In the rotation speed feedback link of the method, a vehicle acceleration torque is calculated through a vehicle resistance torque and a vehicle traction torque. However, it is difficult to calculate and measure the vehicle resistance torque. Therefore, an entire transmission system model is unavailable. Moreover, the method requires to establish an accurate mathematical model for the transmission system. Since the transmission system has many components, and a parameter and a characteristic of each component are related to a working environment and a usage time, it is difficult to establish an accurate model that works throughout a lifecycle. Since the vehicle resistance torque cannot be estimated and the mathematical model for the transmission system is inaccurate, a vehicle vibration suppression effect of the method is greatly reduced.

### SUMMARY

A vehicle and an active damping control method therefor, and a vehicle controller are provided. The method is applicable to a wide range of working conditions, is easy to implement and verify, and can effectively eliminate vehicle vibration at lower costs.

According to a first aspect, the present disclosure provides an active damping control method for a vehicle. The vehicle includes a motor and a motor controller. The method includes the following steps. A rotation speed of the motor is obtained. Filtering is respectively performed on the rotation speed through a first low-pass filter and a second low-pass filter, to obtain a first filtered rotation speed and a second filtered rotation speed, and a rotation speed fluctuation value is obtained based on the first filtered rotation speed and the second filtered rotation speed. An active damping adjustment coefficient and an active damping clipped torque are obtained based on the rotation speed. An active damping torque is obtained based on the rotation speed fluctuation value, the active damping adjustment coefficient, and the active damping clipped torque. The motor is controlled through the motor controller based on the active damping torque.

According to the active damping control method for a vehicle in the embodiments of the present disclosure, the rotation speed fluctuation value may be determined merely through the two low-pass filters based on a real-time rotation speed without a need to use a frequency, then the active damping torque is obtained based on the rotation speed fluctuation value, the active damping adjustment coefficient, and the active damping clipped torque, and then the motor is controlled through the motor controller based on the active damping torque. The method is applicable to a wide range of working conditions, is easy to implement and verify, and can effectively eliminate vehicle vibration at lower costs.

According to a second aspect, the present disclosure provides a vehicle controller, which includes a memory, a processor, and a computer program stored in the memory. The computer program, when executed by the processor, implements the active damping control method for a vehicle.

According to the vehicle controller in the embodiments of the present disclosure, the computer program corresponding to the active damping control method for a vehicle stored therein is executed by the processor, so that vehicle vibration can be effectively eliminated at lower costs

According to a third aspect, the present disclosure provides a vehicle, which includes a motor, a motor controller, and the vehicle controller.

According to the vehicle in the embodiments of the present disclosure, an architecture in which the motor controller and the above vehicle controller work in combination is implemented. To be specific, the motor controller obtains a rotation speed of the motor and provides the rotation speed of the motor to the vehicle controller, the vehicle controller calculates a required active damping torque for the motor controller, and then the motor controller controls the motor based on the active damping torque. In this way, a communication delay time is reduced.

Part of additional aspects and advantages of the present disclosure is provided in the following description. The part will be apparent from the following description, or is learned by practice of the present disclosure.

## BRIEF DESCRIPTION OF THE DRAWINGS

FIG. 1 is a schematic flowchart of an active damping control method for a vehicle according to an embodiment of the present disclosure;

FIG. 2 is a schematic flowchart of calculating a rotation speed fluctuation value according to an embodiment of the present disclosure;

FIG. 3 is a schematic flowchart of calculating a filtered rotation speed according to an embodiment of the present disclosure;

FIG. 4 is a schematic flowchart of obtaining an active damping adjustment coefficient according to an embodiment of the present disclosure;

FIG. 5 is a schematic flowchart of obtaining an active damping clipped torque according to an embodiment of the present disclosure;

FIG. 6 is a schematic flowchart of obtaining an active damping torque according to an embodiment of the present disclosure;

FIG. 7 is a schematic flowchart showing that an active damping torque does not take effect when less than an initial active damping torque according to an embodiment of the present disclosure;

FIG. 8 is a schematic flowchart of disabling an active damping function according to an embodiment of the present disclosure;

FIG. 9 is a schematic structural diagram of a vehicle controller according to an embodiment of the present disclosure; and

FIG. 10 is a schematic structural diagram of a vehicle according to an embodiment of the present disclosure.

## DETAILED DESCRIPTION

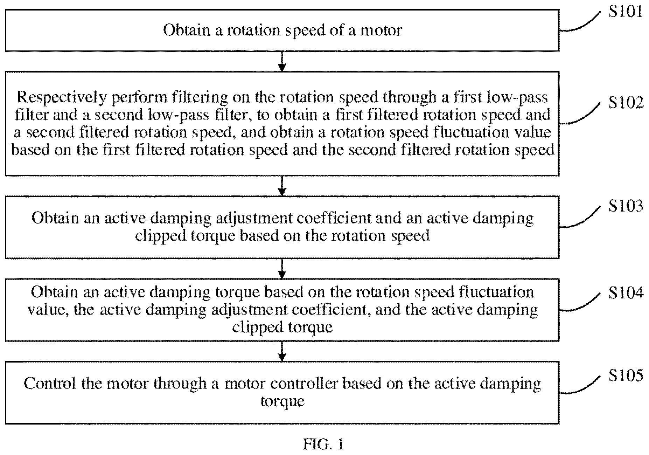

A vehicle and an active damping control method therefor, and a vehicle controller in embodiments of the present disclosure are described below with reference to FIG. 1 to FIG. 10. The same or similar elements or the elements having the same or similar functions are denoted by the same or similar reference numerals throughout the description. The embodiments described with reference to the drawings are exemplary, and should not be construed as a limitation on the present disclosure.

FIG. 1 is a schematic flowchart of an active damping control method for a vehicle according to an embodiment of the present disclosure. As shown in FIG. 1, the active damping control method for a vehicle includes the following steps.

S101: A rotation speed of a motor is obtained.

Specifically, a motor controller may collect and calculate the rotation speed of the motor in real time through a resolver.

S102: Filtering is respectively performed on the rotation speed through a first low-pass filter and a second low-pass filter, to obtain a first filtered rotation speed and a second filtered rotation speed, and a rotation speed fluctuation value is obtained based on the first filtered rotation speed and the second filtered rotation speed.

That a rotation speed fluctuation value is obtained based on the first filtered rotation speed and the second filtered rotation speed may include the following steps. A difference between the first filtered rotation speed and the second filtered rotation speed is calculated, to obtain a first difference. A rotation speed fluctuation calculation coefficient is obtained, and a product of the rotation speed fluctuation calculation coefficient and the first difference is calculated, to obtain the rotation speed fluctuation value.

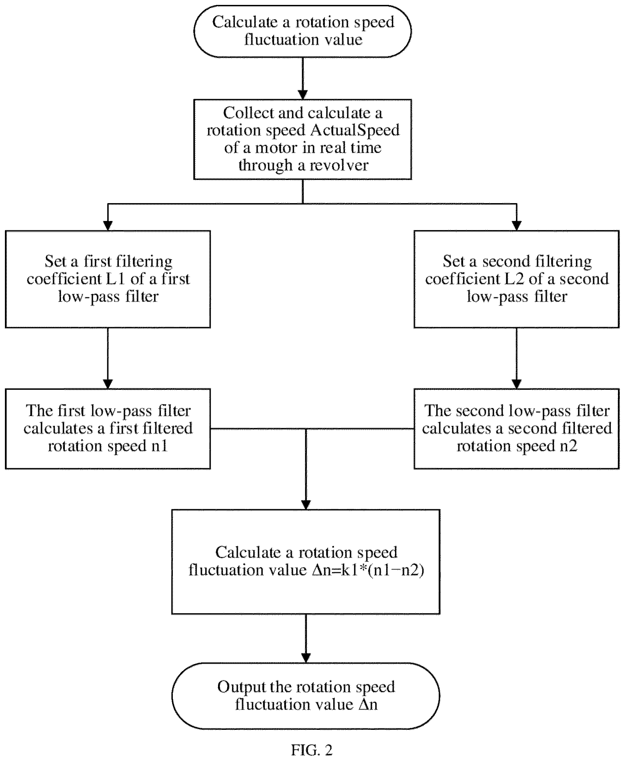

Specifically, referring to FIG. 2, the motor controller is configured to perform the filtering on the rotation speed through dual undifferentiated low-pass filters with different filtering coefficients (L1 and L2) (to be specific, a filtering coefficient corresponding to the first low-pass filter is defined as a first filtering coefficient L1, and a filtering coefficient corresponding to the second low-pass filter is defined as a second filtering coefficient L2, and L1≠L2). The filtering is performed on the rotation speed through the following equation, to obtain a corresponding filtered rotation speed:

$$n\_y = L \cdot (n\_x - n\_y - 1) + n\_y - 1.$$

n_y is a filtered rotation speed currently outputted by a low-pass filter. L is a filtering coefficient of the low-pass filter. n_x is a currently inputted rotation speed. n_y-1 is a filtered rotation speed outputted by the low-pass filter last time. The filtering is performed on the rotation speed through the first low-pass filter to obtain a corresponding first filtered rotation speed n1, and the filtering is performed on the rotation speed through the second low-pass filter to obtain a corresponding second filtered rotation speed n2.

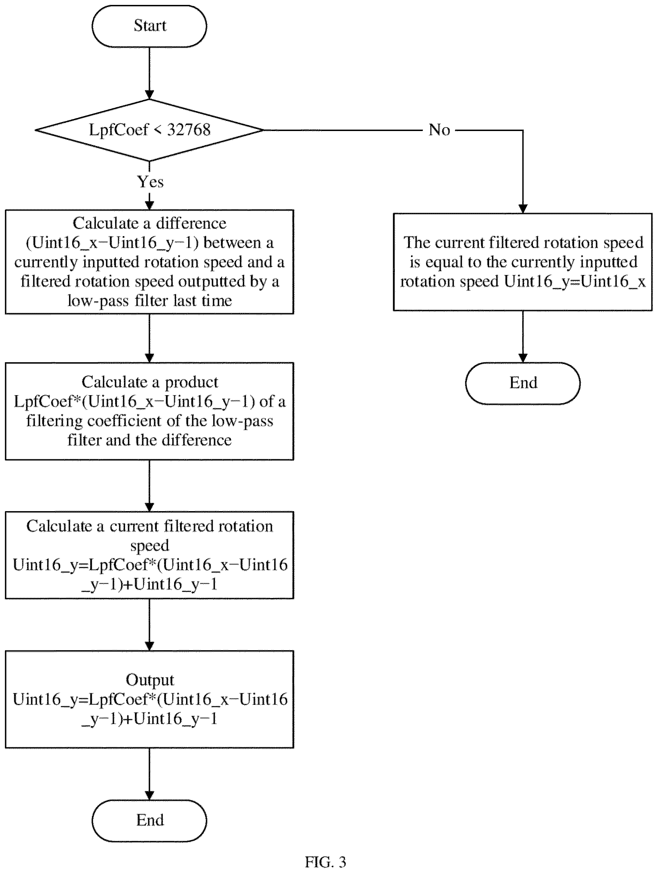

For example, referring to FIG. 3, it may be first determined whether a filtering coefficient LpfCoef of a low-pass filter is less than 32768. If LpfCoef is less than 32768, a difference between a currently inputted rotation speed Uint16_x and a filtered rotation speed Uint16_y-1 outputted by the low-pass filter last time, that is, (Uint16_x-Uint16_y-1), is calculated. Then a product of the filtering coefficient LpfCoef of the low-pass filter and the difference, that is, LpfCoef*(Uint16_x-Uint16_y-1), is calculated. Then a current filtered rotation speed Uint16_y, that is, Uint16_y=LpfCoef*(Uint16_x-Uint16_y-1)+Uint16_y-1, is calculated. If LpfCoef is greater than or equal to 32768, the current filtered rotation speed is equal to the currently inputted rotation speed, that is, Uint16_y=Uint16_x. In this way, the first filtered rotation speed n1 and the second filtered rotation speed n2 can be obtained.

Then, a rotation speed fluctuation value △n is calculated based on an equation of △n=k1*(n1-n2). k1 is a rotation speed fluctuation calculation coefficient. In the solution of the present disclosure, the rotation speed fluctuation value may be determined through the two low-pass filters based on a real-time rotation speed without a need to use a frequency, and then an active damping torque that needs to be applied is determined. Compared with a conventional solution using a band-pass filtering requires to obtain a rotation speed and a frequency, the solution is applicable to any working condition (that is, can obtain a rotation speed fluctuation value in any frequency band, and is applicable to calculation of a rotation speed fluctuation value in any working condition).

S103: An active damping adjustment coefficient and an active damping clipped torque are obtained based on the rotation speed.

Specifically, since a vibration frequency of a transmission system of a vehicle is relatively low, and vibration in a low speed range has significant impact on comfort, in the present disclosure, different active damping adjustment coefficients CoefActiveDamp are set based on different rotation speed ranges. In a low-speed area, the active damping adjustment coefficient CoefActiveDamp is set to a first active damping adjustment coefficient CoefActiveDampOne, to apply a strong vibration suppression effect on the vehicle, which can effectively alleviate the vibration in the low-speed area. In a high-speed area, resonance and vibration of the vehicle do not easily occur. Therefore, the active damping adjustment coefficient CoefActiveDamp is set to a second active damping adjustment coefficient CoefActiveDampTwo. Even if resonance occurs, impact thereof is acceptable after filtering performed by the transmission system. In addition, in a transition region between the low-speed area and the high-speed area, the active damping adjustment coefficient CoefActiveDamp is linearly transitioned, so that an active damping torque TrqActiveDamp process can be smoothly transitioned without generating an adjustment oscillation.

In an example, that an active damping adjustment coefficient and an active damping clipped torque are obtained based on the rotation speed may include the following steps. A first active damping adjustment coefficient is used as the active damping adjustment coefficient if the rotation speed is less than a first active damping switching rotation speed. A second active damping adjustment coefficient is used as the active damping adjustment coefficient if the rotation speed is greater than a second active damping switching rotation speed. The first active damping switching rotation speed is less than the second active damping switching rotation speed. Linear interpolation calculation is performed on the first active damping adjustment coefficient and the second active damping adjustment coefficient based on a ratio relationship among the rotation speed, the first active damping switching rotation speed, and the second active damping switching rotation speed to obtain the active damping adjustment coefficient, if the rotation speed is greater than or equal to the first active damping switching rotation speed and less than or equal to the second active damping switching rotation speed.

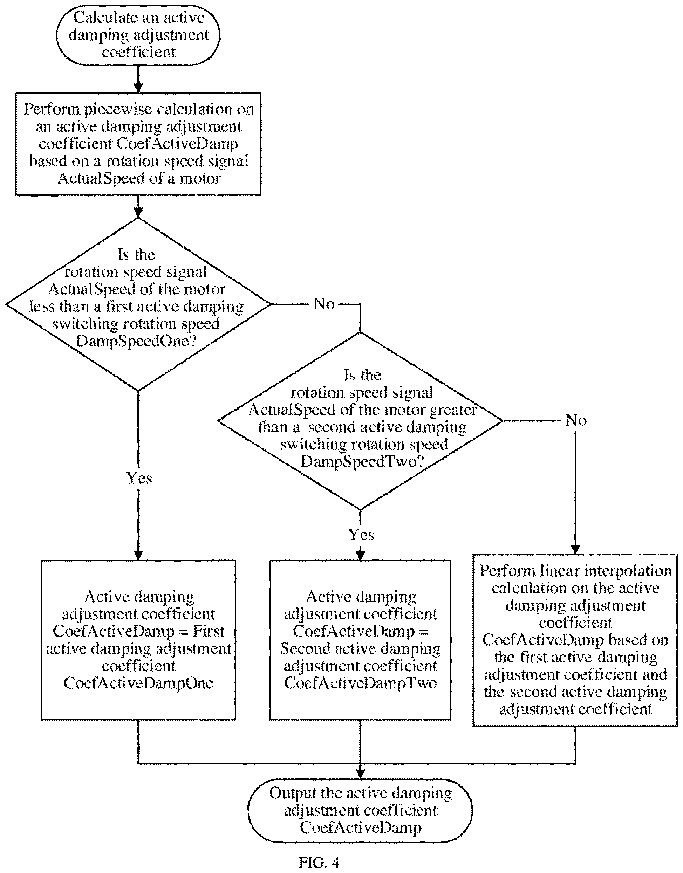

Specifically, referring to FIG. 4, the motor controller performs piecewise calculation on the active damping adjustment coefficient CoefActiveDamp based on a rotation speed ActualSpeed of the motor. When the rotation speed ActualSpeed of the motor is less than a first active damping switching rotation speed DampSpeedOne, the active damping adjustment coefficient CoefActiveDamp is equal to the first active damping adjustment coefficient CoefActiveDampOne. When the rotation speed ActualSpeed of the motor is greater than a second active damping switching rotation speed DampSpeedTwo, the active damping adjustment coefficient CoefActiveDamp is equal to the second active damping adjustment coefficient CoefActiveDampTwo. When the rotation speed ActualSpeed of the motor is greater than or equal to the first active damping switching rotation speed DampSpeedOne and less than or equal to the second active damping switching rotation speed DampSpeedTwo, linear interpolation calculation is performed on the first active damping adjustment coefficient CoefActiveDampOne and the second active damping adjustment coefficient CoefActiveDampTwo based on a ratio relationship among the rotation speed ActualSpeed, the first active damping switching rotation speed DampSpeedOne, and the second active damping switching rotation speed DampSpeedTwo, to obtain the active damping adjustment coefficient CoefActiveDamp.

The linear interpolation calculation is performed for two known points (x1, y1) and (x0, y0) (x ranging between x0 and x1) by successively calculating a distance of x to x0 and a ratio of the distance of x to x0 to a distance of x1 to x0 and multiplying the ratio by a distance of y1 to y0 to calculate a value of y corresponding to a point x, that is,

y=y0+(x-x0)*(y1-y0)/(x1-x0). x is the rotation speed of the motor. x0 is the first active damping switching rotation speed. x1 is the second active damping switching rotation speed. y0 is the first active damping adjustment coefficient, y1 is the second active damping adjustment coefficient, y is active damping adjustment coefficient. The active damping adjustment coefficient may be obtained based on the above equation of y=y0+(x-x0)*(y1-y0)/(x1-x0).

It should be noted that, the first active damping adjustment coefficient and the second active damping adjustment coefficient may be flexibly calibrated without a limitation on a magnitude relationship between the two.

In another example, that an active damping adjustment coefficient and an active damping clipped torque are obtained based on the rotation speed includes the following steps. A first active damping clipped torque value is used as the active damping clipped torque if the rotation speed is less than a first active damping switching rotation speed. A second active damping clipped torque value is used as the active damping clipped torque if the rotation speed is greater than a second active damping switching rotation speed. The first active damping switching rotation speed is less than the second active damping switching rotation speed. Linear interpolation calculation is performed on the first active damping clipped torque value and the second active damping clipped torque value based on a ratio relationship among the rotation speed, the first active damping switching rotation speed, and the second active damping switching rotation speed to obtain the active damping clipped torque, if the rotation speed is greater than or equal to the first active damping switching rotation speed and less than or equal to the second active damping switching rotation speed.

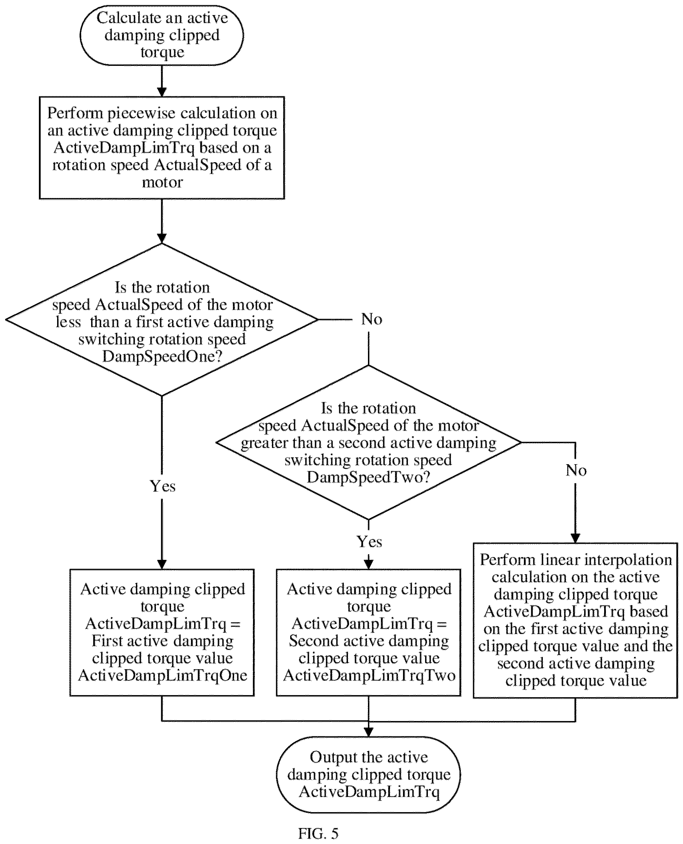

Specifically, referring to FIG. 5, the motor controller performs piecewise calculation on an active damping clipped torque ActiveDampLimTrq based on the rotation speed ActualSpeed of the motor. When the rotation speed ActualSpeed of the motor is less than the first active damping switching rotation speed DampSpeedOne, the active damping clipped torque ActiveDampLimTrq is equal to a first active damping clipped torque value ActiveDampLimTrqOne. When the rotation speed ActualSpeed of the motor is greater than the second active damping switching rotation speed DampSpeedTwo, the active damping clipped torque ActiveDampLimTrq is equal to a second active damping clipped torque value ActiveDampLimTrqTwo. When the rotation speed is greater than or equal to the first active damping switching rotation speed DampSpeedOne and less than or equal to the second active damping switching rotation speed DampSpeedTwo, linear interpolation calculation is performed on the first active damping clipped torque value ActiveDampLimTrqOne and the second active damping clipped torque value ActiveDampLimTrqTwo based on a ratio relationship among the rotation speed ActualSpeed, the first active damping switching rotation speed DampSpeedOne, and the second active damping switching rotation speed DampSpeedTwo, to obtain the active damping clipped torque. Performing the linear interpolation calculation means performing calculation based on the above equation of y=y0+(x-x0)*(y1-y0)/(x1-x0). x is the rotation speed of the motor. x0 is the first active damping switching rotation speed. x1 is the second active damping switching rotation speed. y0 is the first active damping clipped torque value. y1 is the second active damping clipped torque value, y is the active damping clipped torque. The active damping clipped torque may be obtained based on the above equation of y=y0+(x-x0)*(y1-y0)/(x1-x0).

It should be noted that, the first active damping clipped torque value and the second active damping clipped torque value may be flexibly calibrated without a limitation on a magnitude relationship between the two.

S104: An active damping torque is obtained based on the rotation speed fluctuation value, the active damping adjustment coefficient, and the active damping clipped torque.

In an example, step S104 may include the following steps. A target active damping torque is obtained based on the rotation speed fluctuation value and the active damping adjustment coefficient. The target active damping torque is clipped based on the active damping clipped torque, to obtain the active damping torque.

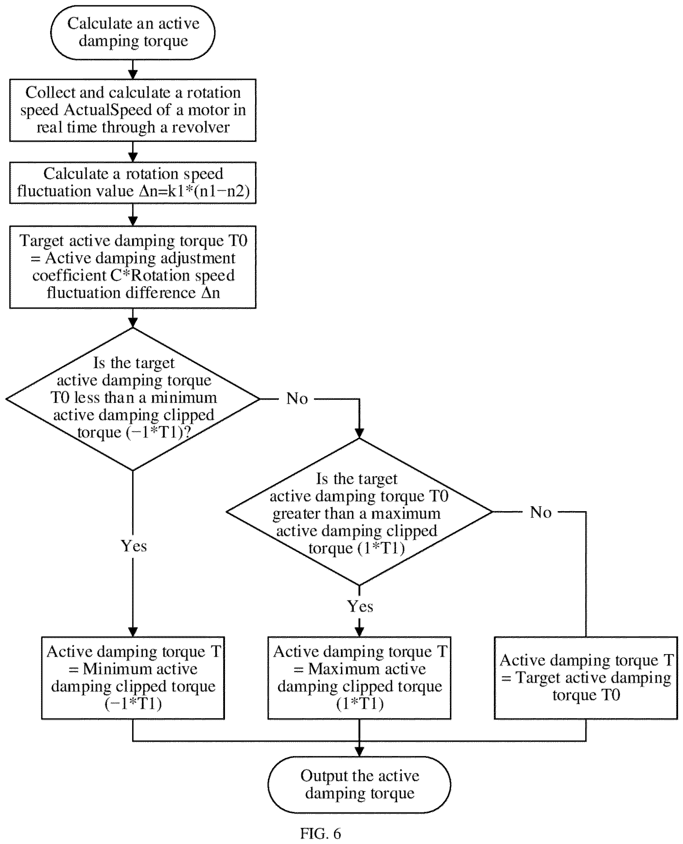

Specifically, referring to FIG. 6, the target active damping torque is obtained through an equation of T0=C·k2·△n. T0 is the target active damping torque. C is the active damping adjustment coefficient. k2 is a preset parameter. △n is the rotation speed fluctuation value. The target active damping torque and the rotation speed fluctuation value form a tracking compensation effect. Through the calculation equation of the target active damping rotation speed torque, the rotation speed fluctuation value and the target active damping torque may form a direct ratio correspondence, or may form a nonlinear correspondence (factors causing vibration and resonance such as a road surface and a resistance are nonlinear), which facilitates vibration calibration of a vehicle system (calibration of the active damping adjustment coefficient).

Referring to FIG. 6, the target active damping torque is clipped through an equation of T=min[max(T0, -T1), T1], to obtain the active damping torque. T is the active damping torque. T0 is the target active damping torque. T1 is the active damping clipped torque. Specifically, when the target active damping torque T0 is less than a minimum active damping clipped torque (-1*T1), the active damping torque T is equal to the minimum active damping clipped torque (-1*T1) (that is, a negative value of the active damping clipped torque). When the target active damping torque T0 is greater than a maximum active damping clipped torque (1*T1), the active damping torque T is equal to the maximum active damping clipped torque (1*T1) (that is, a positive value of the active damping clipped torque). When the target active damping torque T0 is greater than or equal to the minimum active damping clipped torque (-1*T1), it is determined whether the target active damping torque T0 is less than or equal to the maximum active damping clipped torque (1*T1). If the target active damping torque T0 is less than or equal to the maximum active damping clipped torque (1*T1), the active damping torque T is equal to the target active damping torque T0. Otherwise, the active damping torque T is equal to the maximum active damping clipped torque (1*T1). The target active damping torque is clipped to ensure a safe torque. Then the target active damping torque is added to a torque instruction to obtain a torque reference for closed-loop torque control. In this way, closed-loop current control is achieved without changing a field-oriented vector control framework, thereby facilitating integration and platformization.

S105: The motor is controlled through the motor controller based on the active damping torque.

In an example, before the motor is controlled through the motor controller based on the active damping torque, the active damping control method for a vehicle may further include the following steps. An initial active damping torque is obtained. The active damping torque is updated to 0 if an absolute value of the active damping torque is less than the initial active damping torque.

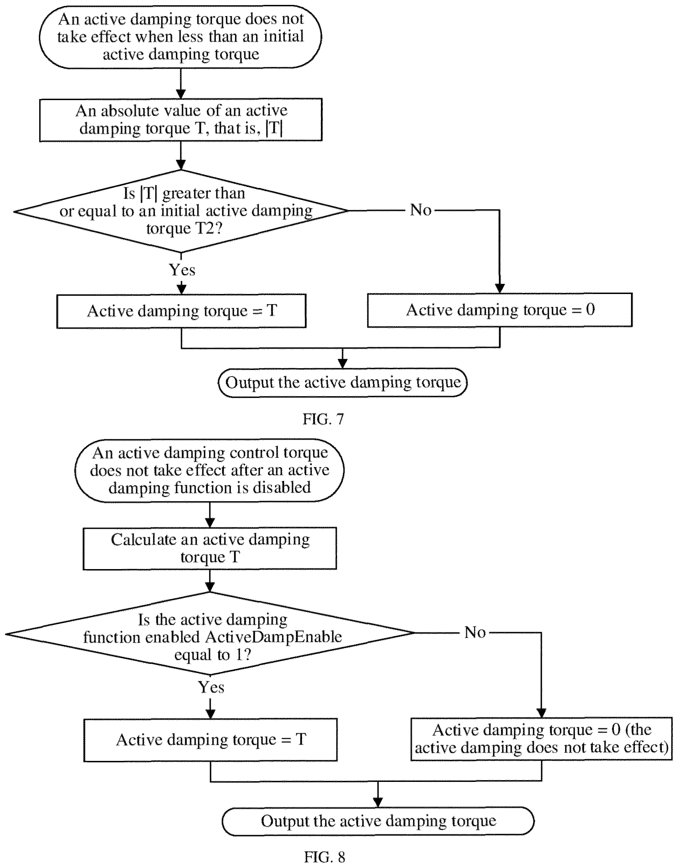

Specifically, referring to FIG. 7, before the motor is controlled through the motor controller based on the active damping torque, an initial active damping torque T2 is obtained, and a clip of the active damping torque T is modified to [-T1, -T2]u[T2, T1]. The absolute value ITI of the active damping torque is less than T2 (that is, the initial active damping torque). In other words, when -T2<T<T2, the active damping torque is updated to 0. In other words, for vibration with a low active damping demand, active damping is not performed. Therefore, the active damping torque is set to not take effect when less than the initial active damping torque, which can avoid impact on a gear meshing force.

In another example, before the motor is controlled through the motor controller based on the active damping torque, the active damping control method for a vehicle may further include the following step. The active damping torque is updated to 0 if an active damping function disabling instruction is received.

Specifically, referring to FIG. 8, if the motor controller receives the active damping function disabling instruction from the vehicle controller before the motor is controlled through the motor controller based on the active damping torque, that is, when active damping enable ActiveDampEnable is not 1, the active damping torque is updated to 0.

In summary, according to the active damping control method for a vehicle, the rotation speed fluctuation value may be determined merely through the two low-pass filters based on a real-time rotation speed without a need to use a frequency, then the active damping torque is obtained based on the rotation speed fluctuation value, the active damping adjustment coefficient, and the active damping clipped torque, and then the motor is controlled through the motor controller based on the active damping torque. The method is applicable to a wide range of working conditions, is easy to implement and verify, and can effectively eliminate vehicle vibration at lower costs.

The present disclosure further provides a vehicle controller.

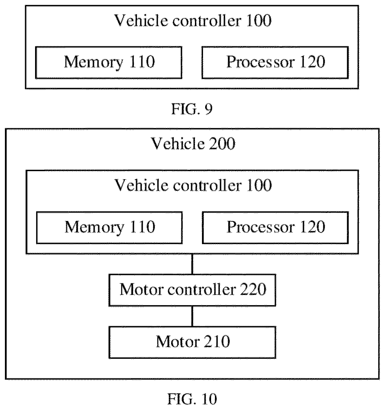

FIG. 9 is a schematic structural diagram of a vehicle controller according to an embodiment of the present disclosure. As shown in FIG. 9, a vehicle controller 100 includes a memory 110, a processor 120, and a computer program stored in the memory 120. The computer program, when executed by the processor 120, implements the above active damping control method for a vehicle.

Specifically, the vehicle controller 100 controls an active damping function of a motor controller to act through calibration parameters (to be specific, active damping enable ActiveDampEnable, a first active damping adjustment coefficient CoefActiveDampOne, a second active damping adjustment coefficient CoefActiveDampTwo, a first active damping clipped torque value ActiveDampLimTrqOne, a second active damping clipped torque value ActiveDampLimTrqTwo, a first active damping switching rotation speed DampSpeedOne, a second active damping switching rotation speed DampSpeedTwo, a first filtering coefficient corresponding to a first low-pass filter, a second filtering coefficient L2 corresponding to a second low-pass filter, and an initial active damping torque T2), which improves a calculation precision.

According to the vehicle controller in the embodiments of the present disclosure, the computer program corresponding to the active damping control method for a vehicle stored therein is executed by the processor, so that vehicle vibration can be effectively eliminated at lower costs

The present disclosure further provides a vehicle.

FIG. 10 is a schematic structural diagram of a vehicle according to an embodiment of the present disclosure. As shown in FIG. 10, the vehicle 200 includes a motor 210, a motor controller 220, and the above vehicle controller 100.

Specifically, the motor controller 220 sends a rotation speed of the motor and a torque of the motor to the vehicle controller 100 through a CAN line. The vehicle controller 100 receives an operation mode (for example, an economic mode (ecology conservation optimization, ECO), a standard mode (NORMAL), or a sport mode (SPORT)), a throttle signal, a brake signal, an acceleration signal, a vehicle speed signal, the torque of the motor, the rotation speed of the motor, and various working state signals during operation of the vehicle 200. The vehicle controller calculates a target torque (which is sent by the vehicle controller 100 to the motor controller 220) based on the received signal and a throttle demand, and identifies an operating status of the vehicle 100 to control a vehicle damping control parameter. The motor controller 220 responds to the target torque of the vehicle controller 100, and feeds back signals such as the rotation speed of the motor and the torque of the motor in real time.

According to the vehicle in the embodiments of the present disclosure, an architecture in which the motor controller and the above vehicle controller work in combination is implemented. To be specific, the motor controller obtains the rotation speed of the motor and provides the rotation speed of the motor to the vehicle controller, the vehicle controller calculates a required active damping torque for the motor controller, and then the motor controller controls the motor based on the active damping torque. In this way, a communication delay time is reduced.

It should be noted that, the logic and/or steps shown in the flowcharts or described in other manners herein may be regarded as a sequence list of executable instructions for implementing logical functions, which may be specifically implemented in any computer-readable medium for use by or in combination with an instruction execution system, device, or apparatus (such as a computer-based system, a system including a processor, or other systems that can obtain instructions from the instruction execution system, device, or apparatus and execute the instructions). In this specification, a "computer-readable medium" may be any device that can include, store, communicate, propagate, or transmit a program for use by or in combination with the instruction execution system, device, or apparatus. More specific examples (a non-exhaustive list) of the computer-readable storage medium include an electrical connection portion (an electronic device) with one or more wires, a portable computer case (a magnetic device), a random access memory (RAM), a read-only memory (ROM), an erasable programmable read-only memory (EPROM or a flash memory), an optical fiber device, and a portable compact disk read-only memory (CDROM). In addition, the computer-readable medium even may be paper or other suitable media on which the program may be printed, because the program may be obtained electronically, for example, by optically scanning the paper or the other media, then performing editing, interpreting, or processing in other suitable manners if necessary, and then performing storage in a computer memory.

It should be understood that, parts of the present disclosure may be implemented by hardware, software, firmware, or a combination thereof. In the above implementations, multiple steps or methods may be implemented by software or firmware stored in a memory and executable by a proper instruction execution system. For example, if the multiple steps or methods are implemented by hardware, same as another implementation, the multiple steps or methods may be implemented through any of the following technologies known in the art or a combination thereof: a discrete logic circuit with a logic gate circuit for implementing a logic function for a data signal, a dedicated integrated circuit with a proper combinational logic gate circuit, a programmable gate array (PGA), a field programmable gate array (FPGA), and the like.

In the descriptions of the specification, a description with reference to terms such as "an embodiment", "some embodiments", "an example", "a specific example", or "some examples" means that specific features, structures, materials, or characteristics described with reference to the embodiment or the example are included in at least one embodiment or example of the present disclosure. In this specification, exemplary expressions of the above terms do not necessarily mean the same embodiment or example. In addition, the described specific features, structures, materials, or characteristics may be combined in a proper manner in any one or more embodiments or examples.

In the descriptions of this specification, orientation or position relationships indicated by the terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and do not indicate or imply that the mentioned device or element needs to have a particular orientation or be constructed and operated in a particular orientation. Therefore, such terms should not be construed as a limitation on the present disclosure.

In addition, the terms "first" and "second" are merely used for description, and cannot be construed as indicating or implying relative importance or implying a quantity of indicated technical features. Therefore, features defined with "first" and "second" may explicitly or implicitly include at least one of the features. In the descriptions of the present disclosure, unless explicitly specified, "multiple" means at least two, for example, two or three.

In the descriptions of this specification, unless otherwise specified, the terms such as "mount", "connect", "connection", and "fix" should be understood in a broad sense. For example, the connection may be a fixed connection, a detachable connection, or an integral connection; or may be a mechanical connection or an electrical connection; or may be a direct connection, an indirect connection through an intermediate medium, internal communication between two elements, or an interaction relationship between two elements, unless otherwise explicitly specified. A person of ordinary skill in the art may understand specific meanings of the terms in the present disclosure based on specific situations.

In the present disclosure, unless otherwise explicitly specified and defined, that a first feature is "on" or "under" a second feature may mean that the first feature is in direct contact with the second feature or that the first feature is in indirect contact with the second feature through an intermediate medium. In addition, that the first feature is "above", "over", or "on" the second feature may mean that the first feature is directly above or obliquely above the second feature, or may merely mean that the first feature is at a higher horizontal position than the second feature. That the first feature is "below", "under", and "beneath" the second feature may mean that the first feature is directly below the second feature or obliquely below the second feature, or may merely mean that the first feature is at a lower horizontal position than the second feature.

Although the embodiments of the present disclosure are shown and described above, it may be understood that, the above embodiments are exemplary and should not be understood as a limitation on the present disclosure. A person of ordinary skill in the art may make changes, modifications, replacements, or variations to the above embodiments within the scope of the present disclosure.

**Claims**

1. An active damping control method for a vehicle, the vehicle comprising a motor and a motor controller, the method comprising:

   obtaining a rotation speed of the motor;
   respectively performing filtering on the rotation speed through a first low-pass filter and a second low-pass filter, to obtain a first filtered rotation speed and a second filtered rotation speed, and obtaining a rotation speed fluctuation value based on the first filtered rotation speed and the second filtered rotation speed;
   obtaining an active damping adjustment coefficient and an active damping clipped torque based on the rotation speed;
   obtaining an active damping torque based on the rotation speed fluctuation value, the active damping adjustment coefficient, and the active damping clipped torque; and
   controlling the motor through the motor controller based on the active damping torque.

2. The active damping control method for a vehicle according to claim 1, wherein the obtaining an active damping adjustment coefficient and an active damping clipped torque based on the rotation speed comprises:

   using a first active damping adjustment coefficient as the active damping adjustment coefficient if the rotation speed is less than a first active damping switching rotation speed;

using a second active damping adjustment coefficient as the active damping adjustment coefficient if the rotation speed is greater than a second active damping switching rotation speed, wherein the first active damping switching rotation speed is less than the second active damping switching rotation speed; and
performing linear interpolation calculation on the first active damping adjustment coefficient and the second active damping adjustment coefficient based on a ratio relationship among the rotation speed, the first active damping switching rotation speed, and the second active damping switching rotation speed to obtain the active damping adjustment coefficient, if the rotation speed is greater than or equal to the first active damping switching rotation speed and less than or equal to the second active damping switching rotation speed.

3. The active damping control method for a vehicle according to claim 1, wherein the obtaining an active damping adjustment coefficient and an active damping clipped torque based on the rotation speed comprises:

   using a first active damping clipped torque value as the active damping clipped torque if the rotation speed is less than a first active damping switching rotation speed;
   using a second active damping clipped torque value as the active damping clipped torque if the rotation speed is greater than a second active damping switching rotation speed, wherein the first active damping switching rotation speed is less than the second active damping switching rotation speed; and
   performing linear interpolation calculation on the first active damping clipped torque value and the second active damping clipped torque value based on a ratio relationship among the rotation speed, the first active damping switching rotation speed, and the second active damping switching rotation speed to obtain the active damping clipped torque, if the rotation speed is greater than or equal to the first active damping switching rotation speed and less than or equal to the second active damping switching rotation speed.

4. The active damping control method for a vehicle according to claim 1, wherein the obtaining an active damping torque based on the rotation speed fluctuation value, the active damping adjustment coefficient, and the active damping clipped torque comprises:

   obtaining a target active damping torque based on the rotation speed fluctuation value and the active damping adjustment coefficient; and clipping the target active damping torque based on the active damping clipped torque, to obtain the active damping torque.

5. The active damping control method for a vehicle according to claim 4, wherein the target active damping torque is obtained through the following equation:

$$T0 = C \cdot k2 \cdot \triangle n,$$

wherein T0 is the target active damping torque; C is the active damping adjustment coefficient; k2 is a preset parameter; and $\triangle n$ is the rotation speed fluctuation value.

6. The active damping control method for a vehicle according to claim 4, wherein the clipping the target active damping torque based on the active damping clipped torque, to obtain the active damping torque comprises:

using the minimum active damping clipped torque as the active damping torque if the target active damping torque is less than a minimum active damping clipped torque, wherein the minimum active damping clipped torque is a negative value of the active damping clipped torque; using the maximum active damping clipped torque as the active damping torque if the target active damping torque is greater than a maximum active damping clipped torque, wherein the maximum active damping clipped torque is a positive value of the active damping clipped torque; and using the target active damping torque as the active damping torque if the target active damping torque is greater than or equal to the minimum active damping clipped torque and less than or equal to the maximum active damping clipped torque.

7. The active damping control method for a vehicle according to claim 1, wherein the obtaining a rotation speed fluctuation value based on the first filtered rotation speed and the second filtered rotation speed comprises:

calculating a difference between the first filtered rotation speed and the second filtered rotation speed, to obtain a first difference; and obtaining a rotation speed fluctuation calculation coefficient, and calculating a product of the rotation speed fluctuation calculation coefficient and the first difference, to obtain the rotation speed fluctuation value.

8. The active damping control method for a vehicle according to claim 1, wherein the filtering is performed on the rotation speed through the following equation:

$$n\_y = L \cdot (n\_x - n\_y - 1) + n\_y - 1,$$

wherein n_y is a filtered rotation speed currently outputted by a low-pass filter; L is a filtering coefficient of the low-pass filter; n_x is a currently inputted rotation speed; and n_y-1 is a filtered rotation speed outputted by the low-pass filter last time; and wherein a filtering coefficient corresponding to the first low-pass filter is defined as a first filtering coefficient L1; a filtering coefficient corresponding to the second low-pass filter is defined as a second filtering coefficient L2; and L1≠L2.

9. The active damping control method for a vehicle according to claim 1, wherein before the controlling the motor through the motor controller based on the active damping torque, the method further comprises:

obtaining an initial active damping torque; and updating the active damping torque to 0 if an absolute value of the active damping torque is less than the initial active damping torque.

10. The active damping control method for a vehicle according to claim 1, wherein before the controlling the motor through the motor controller based on the active damping torque, the method further comprises: updating the active damping torque to 0 if an active damping function disabling instruction is received.

11. A vehicle controller, comprising a memory, a processor, and a computer program stored in the memory, wherein the computer program, when executed by the processor, implements the active damping control method for a vehicle according to any of claims 1 to 10.

12. A vehicle, comprising a motor, a motor controller, and the vehicle controller according to claim 11.

| | |
|---|---|
| Obtain a rotation speed of a motor | S101 |

| | |
|---|---|
| Respectively perform filtering on the rotation speed through a first low-pass filter and a second low-pass filter, to obtain a first filtered rotation speed and a second filtered rotation speed, and obtain a rotation speed fluctuation value based on the first filtered rotation speed and the second filtered rotation speed | S102 |

| | |
|---|---|
| Obtain an active damping adjustment coefficient and an active damping clipped torque based on the rotation speed | S103 |

| | |
|---|---|
| Obtain an active damping torque based on the rotation speed fluctuation value, the active damping adjustment coefficient, and the active damping clipped torque | S104 |

| | |
|---|---|
| Control the motor through a motor controller based on the active damping torque | S105 |

FIG. 1

Calculate a rotation speed
fluctuation value

Collect and calculate a
rotation speed ActualSpeed
of a motor in real time
through a revolver

Set a first filtering
coefficient L1 of a first
low-pass filter

Set a second filtering
coefficient L2 of a second
low-pass filter

The first low-pass filter
calculates a first filtered
rotation speed n1

The second low-pass filter
calculates a second filtered
rotation speed n2

Calculate a rotation speed
fluctuation value $\Delta n=k1*(n1-n2)$

Output the rotation speed
fluctuation value $\Delta n$

FIG. 2

```
                            ┌──────────────┐
                            │    Start     │
                            └──────┬───────┘
                                   │
                                   ▼
                          ╱─────────────────╲
               ┌─────────╱  LpfCoef < 32768  ╲──────── No ────────┐
               │         ╲─────────────────╱                      │
               │                  │                               │
               │                 Yes                              │
               ▼                  ▼                               ▼
```

Calculate a difference (Uint16_x−Uint16_y−1) between a currently inputted rotation speed and a filtered rotation speed outputted by a low-pass filter last time

The current filtered rotation speed is equal to the currently inputted rotation speed Uint16_y=Uint16_x

Calculate a product LpfCoef*(Uint16_x−Uint16_y−1) of a filtering coefficient of the low-pass filter and the difference

End

Calculate a current filtered rotation speed Uint16_y=LpfCoef*(Uint16_x−Uint16_y−1)+Uint16_y−1

Output Uint16_y=LpfCoef*(Uint16_x−Uint16_y−1)+Uint16_y−1

End

FIG. 3

Calculate an active
damping adjustment
coefficient

Perform piecewise calculation on
an active damping adjustment
coefficient CoefActiveDamp
based on a rotation speed signal
ActualSpeed of a motor

Is the
rotation speed signal
ActualSpeed of the motor
less than a first active damping
switching rotation speed
DampSpeedOne?

No

Is the
rotation speed signal
ActualSpeed of the motor greater
than a second active damping
switching rotation speed
DampSpeedTwo?

No

Yes

Yes

Active damping
adjustment coefficient
CoefActiveDamp = First
active damping adjustment
coefficient
CoefActiveDampOne

Active damping
adjustment coefficient
CoefActiveDamp =
Second active damping
adjustment coefficient
CoefActiveDampTwo

Perform linear interpolation
calculation on the active
damping adjustment
coefficient
CoefActiveDamp based on
the first active damping
adjustment coefficient and
the second active damping
adjustment coefficient

Output the active damping
adjustment coefficient
CoefActiveDamp

FIG. 4

Calculate an active
damping clipped
torque

Perform piecewise calculation on
an active damping clipped torque
ActiveDampLimTrq based on a
rotation speed ActualSpeed of a
motor

Is the rotation
speed ActualSpeed of the motor
less than a first active damping
switching rotation speed
DampSpeedOne?

No

Is the rotation
speed ActualSpeed of the motor
greater than a second active damping
switching rotation speed
DampSpeedTwo?

No

Yes

Yes

Active damping clipped
torque
ActiveDampLimTrq =
First active damping
clipped torque value
ActiveDampLimTrqOne

Active damping clipped
torque
ActiveDampLimTrq =
Second active damping
clipped torque value
ActiveDampLimTrqTwo

Perform linear interpolation
calculation on the active
damping clipped torque
ActiveDampLimTrq based
on the first active damping
clipped torque value and the
second active damping
clipped torque value

Output the active
damping clipped torque
ActiveDampLimTrq

FIG. 5

Calculate an active
damping torque

Collect and calculate a rotation
speed ActualSpeed of a motor in
real time through a revolver

Calculate a rotation speed
fluctuation value $\Delta n = k1*(n1-n2)$

Target active damping torque T0
= Active damping adjustment
coefficient C*Rotation speed
fluctuation difference $\Delta n$

Is the target
active damping torque
T0 less than a minimum
active damping clipped
torque (−1*T1)? — No

Is the target
active damping torque T0
greater than a maximum
active damping clipped
torque (1*T1) — No

Yes

Yes

Active damping torque T
= Minimum active
damping clipped torque
(−1*T1)

Active damping torque T
= Maximum active
damping clipped torque
(1*T1)

Active damping torque T
= Target active damping
torque T0

Output the active
damping torque

FIG. 6

An active damping torque does not take effect when less than an initial active damping torque

An absolute value of an active damping torque T, that is, |T|

Is |T| greater than or equal to an initial active damping torque T2?

No

Yes

Active damping torque = T

Active damping torque = 0

Output the active damping torque

FIG. 7

An active damping control torque does not take effect after an active damping function is disabled

Calculate an active damping torque T

Is the active damping function enabled ActiveDampEnable equal to 1?

No

Yes

Active damping torque = T

Active damping torque = 0 (the active damping does not take effect)

Output the active damping torque

FIG. 8

Vehicle controller 100

Memory 110     Processor 120

FIG. 9

Vehicle 200

Vehicle controller 100

Memory 110     Processor 120

Motor controller 220

Motor 210

FIG. 10

# EP 4 438 385 A1

## INTERNATIONAL SEARCH REPORT

| | International application No. |
|---|---|
| | **PCT/CN2023/078389** |

| | |
|---|---|
| **A.** | **CLASSIFICATION OF SUBJECT MATTER** |
| | B60L15/20(2006.01)i |

According to International Patent Classification (IPC) or to both national classification and IPC

| | |
|---|---|
| **B.** | **FIELDS SEARCHED** |

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT; CNKI; WPABSC; ENTXTC: 转速, 差, 波动, 限幅, 扭矩, 电机, 滤波; VEN; USTXT; EPTXT; WOTXT; WPABS: speed, difference, fluctuate, amplitude limiting, torque, motor, filter.

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 111483330 A (CHONGQING CHANG'AN NEW ENERGY AUTOMOBILE TECHNOLOGY CO., LTD.) 04 August 2020 (2020-08-04) description, paragraphs 12-85, and figures 1-13 | 1-12 |
| A | CN 105946623 A (BEIJING ELECTRIC VEHICLE CO., LTD.) 21 September 2016 (2016-09-21) entire document | 1-12 |
| A | CN 107508523 A (BORGWARD AUTOMOTIVE (CHINA) CO., LTD.) 22 December 2017 (2017-12-22) entire document | 1-12 |
| A | DE 102016014552 A1 (DAIMLER AG) 01 June 2017 (2017-06-01) entire document | 1-12 |
| A | DE 102010055223 A1 (MITSUBISHI MOTORS CORP.) 14 July 2011 (2011-07-14) entire document | 1-12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 May 2023** | **08 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078389**

| Patent document cited in search report | | | Publication date (day/month/year) | Patent family member(s) | | | Publication date (day/month/year) |
|---|---|---|---|---|---|---|---|
| CN | 111483330 | A | 04 August 2020 | CN | 11148330 | B | 14 June 2022 |
| CN | 105946623 | A | 21 September 2016 | | None | | |
| CN | 107508523 | A | 22 December 2017 | CN | 107508523 | B | 20 September 2019 |
| DE | 102016014552 | A1 | 01 June 2017 | | None | | |
| DE | 102010055223 | A1 | 14 July 2011 | JP | 2011126481 | A | 30 June 2011 |
| | | | | JP | 5250540 | B2 | 31 July 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210187935X